# EUROPEAN PATENT APPLICATION

(11) **EP 4 390 406 A1**
(43) Date of publication of application: **26.06.2024**
(21) Application number: 23208444.2
(22) Date of filing: 08.11.2023
(51) Int. Cl.: G01P 5/24

(54) **ACOUSTIC WIND MEASUREMENT**

(30) Priority: 22.12.2022 EP 22215832
(71) Applicant: Vaisala, OYJ, 00421 Helsinki (FI)
(72) Inventor: Keitaanniemi, Joonas, 02240 Espoo (FI); Mäkinen, Seppo, 00940 Helsinki (FI); Fogelberg, Tuomas, 02170 Espoo (FI)
(74) Representative: Berggren Oy

(57) **Abstract**

According to an example embodiment, a wind measurement apparatus (100) is provided, the apparatus (100) comprising: a base portion (110) and a cover portion (120) arranged at a distance from each other; an arrangement of N transducers (112) disposed on a cover-portion-facing side of the base portion (110) in respective positions that serve as respective vertices of a convex regular polygon of order N, where N is at least three; and a reflector assembly (122, 222) arranged on a base-portion-facing side of the cover portion (120), wherein the reflector assembly (122, 222) is divided into N substantially identical concave reflector portions (122-n), 222-n) that are provided as respective recesses on the base-portion-facing surface of the cover portion (120), wherein the reflector assembly (122, 222) and the base portion (110) are disposed with respect to each other such that a center point of the reflector assembly (122, 222) is spatially aligned with a center point of said convex regular polygon and that each of the N transducers (112) is spatially aligned with a respective boundary between two adjacent reflector portions (122-n, 222-n), and wherein each transducer (112-n) is arranged to: transmit a respective ultrasonic measurement signal in a respective transmitter beam, TX beam, towards the reflector assembly (122, 222) such that the respective TX beam meets the two adjacent reflector portions (122-n, 222-n) on opposite sides of the respective boundary with which the respective transducer (112-n) is spatially aligned, and receive, via said two adjacent reflector portions (122-n, 222-n), respective partial reflections of the respective TX beams originating from those ones of the *N* transducers (112) that are adjacent to the respective transducer (112-n).

## Description

### TECHNICAL FIELD

The example and non-limiting embodiments of the present invention relate to an anemometer apparatus for acoustic wind measurement.

### BACKGROUND

Knowledge of wind conditions is important for a number of human activities, both in professional and in recreational fields. In this regard, accurate and reliable measurement of wind speed and wind direction is essentially important for example in aviation and marine operations as well as in industrial contexts such as energy production by wind turbines. One of the techniques currently applied for measurement of wind speed and wind direction in such professional contexts involves measurement of time of flight of a sound signal using a dedicated measurement apparatus that comprises one or more pairs of a transmitter and a receiver. In such a measurement apparatus each pair of a transmitter and receiver may serve to provide a respective measurement path, whereas three or more measurement paths are typically considered as a requirement for reliable measurement of the wind speed and wind direction. Typically, increasing number of measurement paths results in increased accuracy and reliability of the measurement, whereas increasing the number of measurement paths typically also increases the number of components required for the measurement apparatus, which in turn typically result in increasing structural complexity and increasing manufacturing cost of the measurement apparatus.

### SUMMARY

It is an object of the present invention to provide a wind measurement apparatus that is relatively simple in structure but that yet enables accurate, reliable and robust measurement of wind speed and wind direction.

According to an example embodiment, a wind measurement apparatus is provided, the apparatus comprising: a base portion and a cover portion arranged at a distance from each other; an arrangement of N transducers disposed on a cover-portion-facing side of the base portion in respective positions that serve as respective vertices of a convex regular polygon of order N, where N is at least three; and a reflector assembly arranged on a base-portion-facing side of the cover portion, wherein the reflector assembly is divided into N substantially identical concave reflector portions that are provided as respective recesses on the base-portion-facing surface of the cover portion, wherein the reflector assembly and the base portion are disposed with respect to each other such that a center point of the reflector assembly is spatially aligned with a center point of said convex regular polygon and that each of the N transducers is spatially aligned with a respective boundary between two adjacent reflector portions, wherein each transducer is arranged to: transmit a respective ultrasonic measurement signal in a respective transmitter beam, TX beam, towards the reflector assembly such that the respective TX beam meets the two adjacent reflector portions on opposite sides of the respective boundary with which the respective transducer is spatially aligned, and receive, via said two adjacent reflector portions, respective partial reflections of the respective TX beams originating from those ones of the N transducers that are adjacent to the respective transducer, and wherein the apparatus further comprises a control portion arranged to operate each transducer to transmit the respective ultrasonic measurement signal in the respective TX beam and to capture the respective ultrasonic measurement signals received in the respective partial reflections of the respective TX beams transmitted from those ones of the N transducers that are adjacent to the respective transducer, and derive one or more wind characteristic based on respective propagation delays of the respective ultrasonic measurement signals transmitted from the N transducers and captured at those ones of the N transducers that are adjacent to the respective transducer:.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described in the following description of some example embodiments of the present invention may be used in combinations other than the combinations explicitly described unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A schematically illustrates some components of a wind measurement apparatus according to an example;
Figure 1B schematically illustrates some components of a wind measurement apparatus according to an example;
Figure 1C schematically illustrates some components of a wind measurement apparatus according to an example;
Figure 2 illustrates some characteristics of an ellipsoidal shape according to an example;
Figure 3 illustrates a block diagram of some elements of a wind measurement apparatus according to an example;
Figure 4 schematically illustrates measurement paths between transducers of a wind measurement apparatus according to an example;
Figure 5A schematically illustrates some components of a wind measurement apparatus according to an example;
Figure 5B schematically illustrates some components of a wind measurement apparatus according to an example;
Figure 6 illustrates a block diagram of some components of an apparatus according to an example;
Figure 7A schematically illustrates some components of a wind measurement apparatus according to an example;
Figure 7B schematically illustrates some components of a wind measurement apparatus according to an example;
Figure 8A schematically illustrates some components of a wind measurement apparatus according to an example; and
Figure 8B schematically illustrates some components of a wind measurement apparatus according to an example.

### DESCRIPTION OF SOME EMBODIMENTS

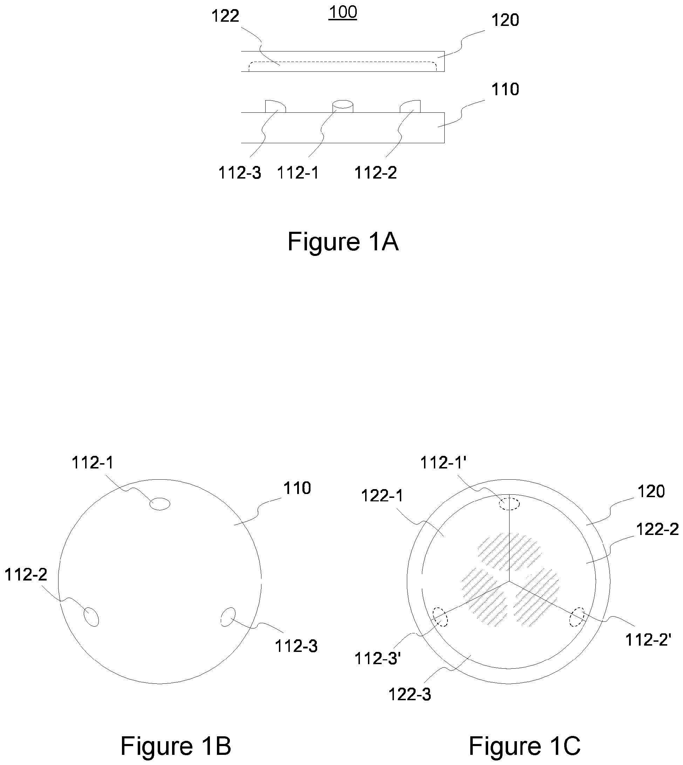

Figures 1A, 1B and 1C schematically illustrate some components of a wind measurement apparatus 100 according to a first example. The wind measurement apparatus 100 comprises a base portion 110 and a cover portion 120 arranged at a distance from each other to form a gap that allows for an airflow through a measurement volume provided between the base portion 110 and the cover portion 120. In the first example, the base portion 110 comprises an arrangement of three transducers 112-1, 112-2, 112-3 disposed on its cover-portion-facing side (e.g. on its cover-portion-facing surface), whereas the cover portion 120 comprises a reflector assembly 122 arranged on a base-portion-facing side (e.g. on the base-portion facing surface) of the cover portion 120. Each of the transducers 112-1, 112-2, 112-3 may transmit a respective measurement signal towards the reflector assembly 122 and receive respective reflections of respective measurement signals originating from the other two transducers 112-1, 112-2, 112-3 from the reflector assembly 122, thereby enabling measurement of characteristics (such as speed and direction) of the airflow passing through the gap between base portion 110 and the cover portion 120. The wind measurement apparatus 100 may be also referred to as an anemometer apparatus and it may be applicable for measuring one or more wind characteristics, such as wind speed and wind direction, via usage of acoustic measurement signals transmitted from and received at the transducers 112-1, 112-2, 112-3, thereby implementing acoustic wind measurement.

The schematic illustration of Figure 1A provides a `side view' to the wind measurement apparatus 100 according to the first example, showing the base portion 110 and the cover portion 120 together with the transducers 112-1, 112-2, 112-3 arranged on the cover-portion-facing side of the base portion 110. The cover portion 120 may be attached to the base portion 110 via a plurality of support elements (not shown in the illustration of Figure 1A). The distance between the base portion 110 and the cover portion 120 is dependent on a spatial arrangement of the transducers 112-1, 112-2, 112-3 on the cover-portion-facing side of the base portion 110 in consideration of characteristics of the reflector assembly 122. This aspect of the wind measurement apparatus 100 is described in further detail in the examples provided in the following.

Figure 1B schematically illustrates the cover-portion-facing side of the base portion 110 according to the first example, showing the transducers 112-1, 112-2, 112-3 that are arranged at respective positions that correspond to respective vertices of a (conceptual) equilateral triangle arranged on the cover-portion-facing side of the base portion 110, thereby constituting a trilaterally symmetrical arrangement of the transducers 112-1, 112-2, 112-3 on the cover-portion-facing side of the base portion 110. As another way of specifying the arrangement of the transducers 112-1, 112-2, 112-3 on the cover-portion-facing side of the base portion 110, the transducers 112-1, 112-2, 112-3 may be disposed at respective positions that are evenly spread (i.e. evenly spaced) on a (conceptual) circle on the cover-portion-facing side of the base portion 110. The distances between the transducers 112-1, 112-2, 112-3 may be chosen in view of the intended usage of the wind measurement apparatus 100 and/or on any requirements or constraints set for the size of the wind measurement apparatus 100. In non-limiting examples, the diameter of the (conceptual) circle at which the transducers 112-1, 112-2, 112-3 are located may have a diameter from a few centimeters to a few tens of centimeters.

In the arrangement of three transducers 112-1, 112-2, 112-3 according to the example of Figures 1A, 1B and 1C, the other two of the transducers 112-1, 112-2, 112-3 may be considered as transducers that are adjacent to any given one of the transducers 112-1, 112-2, 113-3. Each of the transducers 112-1, 112-2, 112-3 may be arranged to transmit a transmitter (TX) beam that conveys a measurement signal towards the reflector assembly 122 for reflection therefrom and for subsequent reception at the adjacent transducers 112-1, 112-2, 112-3. Each of the transducers 112-1, 112-2, 112-3 may be further arranged to receive, from the direction of the reflector assembly 122, respective partial reflections of respective TX beams conveying respective measurement signals transmitted towards the reflector assembly 122 from the adjacent transducers 112-1, 112-2, 112-3. Aspects related to transmission, reception and characteristics of the measurement signal are described in the examples provided in the following.

Figure 1C schematically illustrates the base-portion-facing side of the cover portion 120 according to the first example, showing the reflector assembly 122 that is divided into three identical reflector portions 122-1, 122-2, 122-3 that form a trilaterally rotationally symmetrical reflector element, in other words the reflector assembly 122 exhibits rotational symmetry of order three. Hence, the trilaterally symmetrical arrangement of the transducers 112-1, 112-2, 112-3 on the cover-portion-facing side of the base portion 110 and the trilaterally symmetrical reflector assembly 122 arranged on the base-portion-facing side of the cover portion 120 constitute a trilaterally symmetrical wind measurement arrangement. Each of the reflector portions 122-1, 122-2, 122-3 may comprise a respective concave surface for reflecting measurement signals transmitted from a given one of the transducers 112-1, 112-2, 112-3 for reception by the two adjacent transducers 112-1, 112-2, 112-3 and for reflecting measurement signals transmitted from the two adjacent transducer 112-1, 112-2, 112-3 for reception by the given one of the transducers 112-1, 112-2, 112-3. Due to the concave surfaces of the reflector portions 122-1, 122-2, 122-3, a respective boundary between each pair of two adjacent reflector portions 122-1, 122-2, 122-3 forms a respective ridge. In an example, the reflector assembly 122 may be a separate element that is embedded or otherwise attached to the base-portion-facing side of the cover portion 120, whereas in another example the reflector assembly 122 may be provided as an integral part of cover portion 120 e.g. such that the base-portion-facing surface of the cover portion 120 or at least part thereof is shaped such that it forms the reflector assembly 122.

Along the lines described in the foregoing, each of the transducers 112-1, 112-2, 112-3 is arranged to transmit the measurement signal therefrom as the respective TX beam. In various examples, the measurement signal conveyed in the respective TX beam transmitted from the transducer 112-1, 112-2, 112-3 may comprise a signal that is characteristic of the transducer 112-1, 112-2, 112-3 or the measurement signal conveyed in the respective TX beam transmitted from the transducer 112-1, 112-2, 112-3 may comprise a measurement signal supplied to the respective transducer 112-1, 112-2, 112-3 for transmission therefrom. The respective TX beam transmitted from the transducer 112-1, 112-2, 112-3 may be divergent to an extent that depends on characteristics of the transducer 112-1, 112-2, 112-3.

The measurement signals conveyed in the respective TX beams transmitted from the transducers 112-1, 112-2, 112-3 may comprise respective ultrasonic signals and, hence, each of the transducers 112-1, 112-2, 112-3 may comprise a respective ultrasonic transducer arranged to transmit the respective ultrasonic signal. As a non-limiting example in this regard, each of the transducers 112-1, 112-2, 112-3 may comprise a respective piezoelectric transducer, e.g. a cylindrical piezoelectric transducer that radiates a relatively wide TX beam or a linear piezoelectric transducer that radiates a relatively narrow TX beam. Usage of the linear piezoelectric transducers may be advantageous in that they provide a cost-effective solution while providing a TX beam of sufficient width in view of certain advantageous characteristics of the reflector assembly 122 that includes the concave reflector portions 122-1, 122-2, 122-3 (which are described in further detail in the following).

The schematic illustration of Figure 1C further shows the respective projected positions 112-1', 112-2', 112-3' of the transducers 112-1, 112-2, 112-3 on the reflector assembly 122 in relation to the arrangement of the reflector portions 122-1, 122-2, 122-3 of the reflector assembly 122. As shown in the illustration, respective center points of the arrangement of transducers 112-1, 112-2, 112-3 and the reflector portion 122 are spatially aligned, whereas each of the transducers 112-1, 112-2, 112-3 is spatially aligned with one of the boundaries between two adjacent reflector portions 122-1, 122-2, 122-3:
- the transducer 112-1 is spatially aligned with a boundary between the reflector portions 122-1 and 122-2;
- the transducer 112-2 is spatially aligned with a boundary between the reflector portions 122-2 and 122-3;
- the transducer 112-3 is spatially aligned with a boundary between the reflector portions 122-3 and 122-1 .

In this regard, we may refer to the boundary within the reflector assembly 122 between a pair of adjacent reflector portions 122-1, 122-2, 122-3 that is spatially aligned with a given one of the transducers 112-1, 112-2, 112-3 simply as a boundary aligned or associated with the respective one of the transducers 112-1, 112-2, 112-3 and, conversely, the respective one of the transducers 112-1, 112-2, 112-3 may be referred to as a transducer 112-1, 112-2, 112-3 aligned or associated with the respective boundary. Further in this regard, the spatial alignment between one of the transducers 112-1, 112-2, 112-3 and one of the boundaries between two adjacent reflector portions 122-1, 122-2, 122-3 implies that a projection of the position of the respective transducer 112-1, 112-2, 112-3 along a line that is perpendicular to a reference plane defined by respective positions of the transducers 112-1, 112-2, 112-3 coincides with the respective boundary.

As described in the foregoing, each of the transducers 112-1, 112-2, 112-3 is arranged to transmit the measurement signal therefrom as the respective TX beam. The transducers 112-1, 112-2, 112-3 may be disposed on the base portion 110 such that the respective TX beam transmitted from the transducer 112-1, 112-2, 112-3 meets respective surfaces of adjacent reflector portions 122-1, 122-2, 122-3 on opposite sides of boundary that is aligned with the respective one of the transducers 112-1, 112-2, 112-3. In other words, the respective TX beam may be transmitted from the transducer 112-1, 112-2, 112-3 such that its 'footprint' on the reflector assembly 122 overlaps the boundary that is aligned with the respective one of the transducers 112-1, 112-2, 112-3. Consequently, a first portion of the respective divergent TX beam transmitted from the transducer 112-1, 112-2, 112-3 meets a portion of the surface of one of the reflector portions 122-1, 122-2, 122-3 on a first side of the boundary aligned with the respective transducer 112-1, 112-2, 112-3 and a second portion of the respective TX beam meets a portion the surface of another one of the reflector portions 122-1, 122-2, 122-3 on a second side of the boundary aligned with the respective transducer 112-1, 112-2, 112-3. The respective TX beam transmitted from one of the transducers 112-1, 112-2, 112-3 may have its center axis directed at a predefined target position at the boundary aligned with the respective transducer 112-1, 112-2, 112-3. As an example in this regard, the hatched oval-shaped portions in the schematic illustration of Figure 1C depict the respective portions of the reflector assembly 122 met by the respective TX beams transmitted from the transducers 112-1, 112-2, 112-3. Hence, with the center axis of the respective TX beam directed at the target position located in the boundary aligned with the respective transducer 112-1, 112-2, 112-3, the boundary serves to split the respective TX beam into respective first and second portions of substantially equal size for reflection from the respective pair of adjacent reflector portions 122-1, 122-2, 122-3 at opposite sides of the respective boundary.

It is worth noting that the schematic illustration of Figure 1C serves as a conceptual example regarding the respective portions of the reflector assembly 122 met by the respective TX beams transmitted from the transducers 112-1, 112-2, 112-3 with respect to the respective boundaries within the reflector assembly 122. In various implementations of the wind measurement apparatus 100 the respective portions of the reflector assembly 122 met by the respective TX beams transmitted from the transducers 112-1, 112-2, 112-3 may have a size that is different (e.g. larger) in relation to the size of the reflector assembly 122 than that shown in in the illustration of Figure 1C, they may be at different distances from (e.g. closer to) the center point of the reflector assembly 122 and/or they may be partially overlapping with each other, depending e.g. on the distance between the base portion 110 and the cover portion 120, on characteristics of the reflector portions 122-1, 122-2, 122-3, on characteristics of the transducers 112-1, 112-2, 112-3, on the distance between the transducers 112-1, 112-2, 112-3 and/or on the respective target positions applied for the respective TX beams transmitted from the transducers 112-1, 112-2, 112-3.

Respective orientations of the transducers 112-1, 112-2, 112-3 with respect to the base portion 110 depend on the respective target positions applied for their respective TX beams: each of the transducers 112-1, 112-2, 112-3 is oriented such that its (substantially planar) front face is substantially perpendicular to a (conceptual) line connecting the center point of the front face of the respective transducer 112-1, 112-2, 112-3 and the respective target position, thereby steering the center axis of the respective transducer 112-1, 112-2, 112-3 towards the respective target position. In various scenarios, the respective target positions applied for the respective TX beams of the transducers 112-1, 112-2, 112-3 are relatively close to the center point of the reflector assembly 122 and, in particular, closer to the center point of the reflector assembly 122 than the projected positions 112-1', 112-2', 112-3' of the respective transducers 112-1, 112-2, 112-3 shown in the example of Figure 1C. Consequently, the transducers 112-1, 112-2, 112-3 may be arranged on the base portion 110 in orientations where their respective front faces are inclined with respect to the reference plane. In addition to steering the respective TX beams towards desired directions, such inclination of the front faces of the transducers 112-1, 112-2, 112-3 may be advantageous in terms of preventing water, dust or other 'contamination' from accumulating on the front faces of the transducers 112-1, 112-2, 112-3.

If considering the reflection of the TX beam transmitted from the transducer 112-1 towards the target position located at the respective boundary between the reflector portions 122-1 and 122-2, the first beam portion may meet a portion of the surface of the reflector portion 122-1 and the second beam portion may meet a portion of the surface of the reflector portion 122-2. Consequently, due to the respective ridge formed at the respective boundary within the reflector assembly 122, the first beam portion may be reflected from the reflector portion 122-1 towards the transducer 112-3, whereas the second beam portion may be reflected via the reflector portion 122-2 towards the transducer 112-2, each of the transducers 112-3, 112-2 thereby receiving via the reflector assembly 122 a respective partial reflection of the TX beam transmitted from the transducer 112-1. Hence, the ridge at the respective boundary serves to split the TX beam transmitted from the transducer 112-1 into two beam portions of substantially equal size, thereby also splitting the signal power conveyed in the TX beam of the transducer 112-1 into two substantially equal parts and transferring a first half of the signal power towards the transducer 112-3 and transferring the other half of the signal power towards the transducer 112-1. Along similar lines, the respective TX beam transmitted from the transducer 112-2 may be split into a respective first beam portion to be reflected from the reflector portion 122-2 towards the transducer 112-1 and to a respective second beam portion to be reflected from the reflector portion 122-3 towards the transducer 112-3, whereas the respective TX beam transmitted from the transducer 112-3 may be split into a respective first beam portion to be reflected from the reflector portion 122-3 towards the transducer 112-2 and to a respective second beam portion to be reflected from the reflector portion 122-1 towards the transducer 112-1.

The example of splitting the TX beam into first and second portions of equal size that each convey substantially one half of the overall signal power of the respective TX beam (implicitly) assumes a scenario where the target position for the TX beam transmitted from a given transducer 112-1, 112-2, 112-3 is chosen such that the 'footprint' of the respective TX beam meets the respective surfaces of those two of the reflector portions 122-1, 122-2, 122-3 that are adjacent to the respective aligned boundary while the 'footprint' does not overlap with the third one of the reflector portions 122-1, 122-2, 122-3 (i.e. the 'footprint' does not encompass the center point of the reflector assembly). According to another example, the target position for the TX beam transmitted from a given transducer 112-1, 112-2, 112-3 may be chosen such that the 'footprint' on the respective TX beam meets the respective surfaces of those two of the reflector portions 122-1, 122-2, 122-3 that are adjacent to the respective aligned boundary while the 'footprint' also partially overlaps with the third one of the reflector portions 122-1, 122-2, 122-3 (i.e. the 'footprint' encompasses the center point of the reflector assembly) such that a third portion of the TX beam meets a portion of the surface of third one of the reflector portions 122-1, 122-2, 122-3. In such an approach, the first and second portions of the TX beam may convey substantially equal amount of signal power (that is less than one half of the overall signal power) while part of the power conveyed by the respective TX beam is included in the third portion of the TX beam that is typically substantially smaller than that conveyed by the first and second portions and it may not be reflected to any of the transducers 112-1, 112-2, 112-3.

Still referring to the first example, as described in the foregoing, the respective target positions applied for the respective TX beams transmitted from the transducers 112-1, 112-2, 112-3 are positioned on the respective boundaries between adjacent reflector portions 122-1, 122-2, 122-3 of the reflector assembly 120. If considering the TX beam transmitted from the transducer 112-1, the concave shape of the reflector portions 122-1 and 122-2 that facilitates converging reflection of the measurement signal conveyed in the TX beam towards the transducers 112-3 and 112-2 from a relatively large sub-areas of the reflector portions 122-1 and 122-2 (in comparison to a reflector having a substantially planar surface). Therefore, the concave shape of the reflector portions 122-1 and 122-2 may further allow for some freedom in choosing the position along the respective boundary between the reflector portions 122-1 and 122-2 as the target position for the TX beam transmitted from the transducer 112-1. However, transfer of the signal power may vary with a position of the target point along the boundary between the reflector portions 122-1 and 122-2, whereas a given position along the boundary may serve as a reference position that maximizes the power transfer from the transducer 112-1 to the transducers 112-2 and 112-3 with a given shape of the reflector portions 122-1 and 122-2. The reference position along the boundary between the reflector portions 122-1 and 122-2 may be found, for example, via an experimental procedure via usage of suitable simulation tool(s), whereas the target position may be set to the reference position or within a predefined margin from the reference position in order to ensure transferring as high signal power as possible from the transducer 112-1 to the transducers 112-2 and 112-3. While described herein for the TX beam transmitted from the transducer 112-1, similar considerations for selecting the respective target points apply to respective TX beams transmitted from the transducers 112-2 and 112-3 as well, *mutatis mutandis.*

Hence, the reflector portion 122-1 serves to enable transfer of measurement signals between the transducers 112-1 and 112-3 via reflecting the respective first portion of the TX beam transmitted from the transducer 112-1 for reception at the transducer 112-3 and, vice versa, via reflecting the respective second portion of the TX beam transmitted from the transducer 112-3 for reception at the transducer 112-1, whereas similar considerations apply to the other reflector portions 122-2, 122-3 as well, *mutatis mutandis.*

As described in the foregoing, each of the reflector portions 122-1, 122-2, 122-3 may be provided as a respective concave reflector, where each of the reflector portions 122-1, 122-2, 122-3 may have, for example, a substantially ellipsoidal shape. In this regard, the respective surface of each of the reflector portions 122-1, 122-2, 122-3 may have a substantially ellipsoidal curvature that is defined by a portion of an underlying ellipsoid, and hence the surfaces of the reflector portions 122-1, 122-2, 122-3 may have a shape of a predefined ellipsoidal cap of the underlying ellipsoid. In the present disclosure, in the interest of clarity and brevity of description, such shape of the reflector portions 122-1, 122-2, 122-3 may be also referred to as an ellipsoidal shape, even though only a portion of the underlying ellipsoid is meant. While the present disclosure frequently applies a substantially ellipsoidal reflector shape as an example of the concave reflector surface, the substantially ellipsoidal shape serves as a non-limiting example and in other examples a different concave reflector shape may be applied instead, such as a substantially spherical shape defined via a portion of a sphere or a substantially paraboloidal concave shape defined via a portion of a paraboloid. Further exemplifying characteristics of the concave shape of any of the reflector portions 122-1, 122-2, 122-3 and its position with respect to a respective pair of the transducers 112-1, 112-2, 112-3 are described in the following with references to the reflector portion 122-2 and its position with respect to the respective positions of the transducers 112-1 and 112-2. Similar considerations are valid also for the concave shape of the reflector surface of reflector portion 122-1 and its position with respect to the respective positions of the transducers 112-1 and 112-3 as well as for the concave shape of the reflector surface of reflector portion 122-3 and its position with respect to the respective positions of the transducers 112-2 and 112-3, *mutatis mutandis.*

In an example, the dependency between the concave shape and position of the reflector surface of the reflector portion 122-2 and the respective positions of the transducers 112-1 and 112-2 may be defined as follows: the center points of the respective front faces of the transducers 112-1 and 112-2 may be positioned at respective locations that are at a substantially equal distance from a reference axis that is normal to the reference plane defined by respective locations of the transducers 112-1, 112-2, 112-3 and that intersects and bisects a (conceptual) reference line segment connecting the center points of the respective front faces of the transducers 112-1 and 112-2, whereas the reference axis meets the reflector surface at a normal angle (i.e. the reference axis is perpendicular to a tangent plane of the reflector surface at the point where the reference axis intersects the reflector surface). In the present disclosure, the point of the reflector surface at which the reference axis meets the reflector surface is also referred to as a zero-gradient point. According to an example, the reflector surface may be defined as a concave cap of the underlying concave surface, separated from the underlying concave surface by a surface normal of its center axis. As non-limiting examples in this regard, the underlying concave surface may comprise a surface that is symmetrical with respect to its center axis, whereas the above-described reference axis may coincide with the center axis of the underlying concave surface. Examples of such symmetrical surfaces include an ellipsoid, a spheroid, or a paraboloid, whereas the transducers 112-1 and 112-2 are preferably positioned within the underlying concave surface.

Such shape and positioning of the reflector surface with respect to the respective locations of the transducers 112-1 and 112-2 (and/or such positioning of the transducers 112-1 and 112-2 with respect to the shape and position of the reflector surface) provides a consistent path between the transducers 112-1 and 112-2 via reflection from the reflector portion 122-2 substantially regardless of the distance between the above-described reference plane and the zero-gradient point of the reflector surface. In measurement conditions where the general direction of the airflow through the measurement volume is substantially parallel to the reference plane (as in case of the wind measurement apparatus 100), the consistent path substantially guarantees that regardless of the speed and direction of the airflow and regardless of the shape of the reflector surface around the zero-gradient point a measurement signal originating from one of the transducer 112-1 and 112-2 that meets the zero-gradient point is received at the other one of the transducers 112-1 and 112-2. Moreover, due to the concave shape of the reflector portion also the measurement signals originating from one of the transducers 112-1 and 112-2 and that meet a sub-area of the reflector surface around the zero-gradient point are likewise received at the other one of the transducers 112-1 and 112-2, where the size of the sub-area is dependent on the curvature of the reflector surface.

Consequently, respective reflection characteristics for reflecting and focusing the first portion of the TX beam originating from the transducer 112-1 towards the transducer 112-2 and for reflecting and focusing the second portion of the TX beam originating from the transducer 112-2 towards the transducer 112-1 are substantially similar to each other, thereby facilitating efficient power transfer between the transducers 112-1 and 112-2 with similar power transfer characteristics in both directions. The spatial relationship between the respective positions of the transducers 112-1 and 112-2 and the shape of the concave reflector surface of the reflector portion 122-2 described above generalizes into defining the concave reflector surface of a given one of the reflector portions 122-1, 122-2, 122-3 to follow the shape of a portion of an underlying concave surface such that a respective refence axis meets the reflector surface at a normal angle, where the respective reference axis is substantially perpendicular to the reference plane defined by the respective locations of the transducers 112-1, 112-2, 112-3 and it intersects (e.g. bisects) the (conceptual) reference line segment connecting those two transducers 112-1, 112-2, 112-3 that are spatially aligned with the respective boundaries of the given one of the reflector portions 122-1, 122-2, 122-3 at a position that is substantially at an equal distance from respective positions of said two transducers 112-1, 112-2, 112-3. Herein, the reflector surface may be defined as a concave cap of the underlying concave surface, where the concave cap is separated from the underlying concave surface by a surface normal of its center axis. As an example in this regard, the underlying concave surface may comprise a surface that is symmetrical with respect to its center axis, such as an ellipsoid, a spheroid, or a paraboloid, whereas the respective two transducers 112-1, 112-2, 112-3 are preferably positioned within the underlying concave surface.

The portion of the underlying concave surface that defines the shape of the respective reflector portion 122-1, 122-2, 122-3 may be chosen in consideration of characteristics and direction of the respective TX beams transmitted from the transducers 112-1, 112-2, 112-3, e.g. in consideration of the extent of divergence of the TX beams transmitted therefrom and further in consideration of the respective target positions of the center axes of the respective TX beams at the respective boundaries between the reflector portions 122-1, 122-2, 122-3 in the reflector assembly 122. In this regard, the reflector surfaces may be made sufficiently large to ensure receiving the respective TX beams originating from the respective pair of the transducers 112-1, 112-2, 112-3 aligned with its boundaries substantially in their entirety at the chosen distance between the base portion 110 and the cover portion 120, possibly further accounting for any spatial shifting of the TX beam that may occur due to wind at wind speeds of interest.

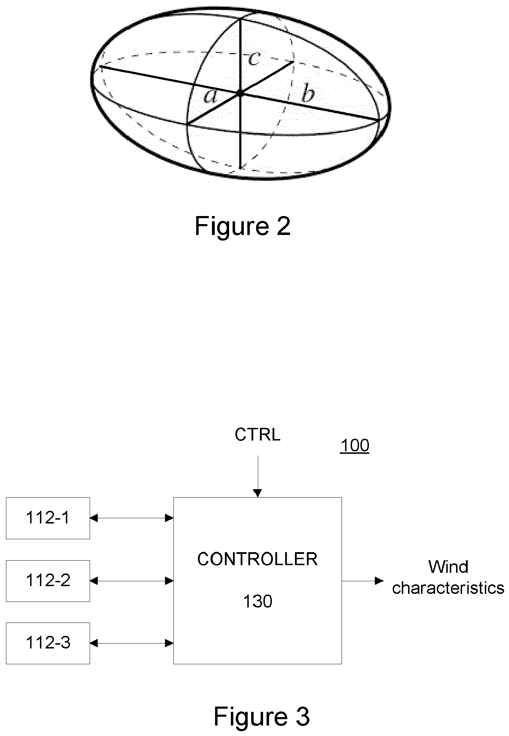

In an example where the reflector surface has a substantially ellipsoidal shape, the reflector portion 122-2 may be defined as a portion of a (conceptual) underlying ellipsoid having its first principal axis connecting the center points of the respective front faces of the transducers 112-1 and 112-2 and having its center point at a position that is substantially at an equal distance from the center points of the respective front faces of the transducers 112-1 and 112-2. Consequently, the zero-gradient point may comprise an endpoint of a second principal axis of the underlying ellipsoid whereas a plane defined by the first principal axis and a third principal axis of the underlying ellipsoid coincides with the reference plane defined by (the center points of the respective front faces of) the transducers 112-1, 112-2, 112-3. Considering the relationship between the shape of the ellipsoidal surface of the reflector portion 122-2 and the respective positions of the transducers 112-1 and 112-2 in view of the ellipsoid illustrated in Figure 2, the center points of the respective front faces of the transducers 112-1 and 112-2 may be positioned on the principal axis b at a distance D from the center point of the underlying ellipsoid (shown as a dot where the principal axes a, *b* and c meet) at opposite sides of the center point, whereas the zero-gradient point may be one of the endpoints of the principal axis c. In a variation of this example, the center points of the respective front faces of the transducers 112-1 and 112-2 may be offset by a predefined distance from the plane defined by the principal axes a and b (i.e. along the principal axis c). In both these examples the portion of the underlying ellipsoid that defines the shape of ellipsoidal surface of the reflector portion 122-2 may be chosen in consideration of characteristics and direction of the respective TX beams transmitted from the transducers 112-1, 112-2. Similar considerations apply to defining respective ellipsoidal concave surfaces for the reflector portions 112-1 and 112-3 as well, *mutatis mutandis.*

It should be noted that the relationship between the substantially ellipsoidal shape of the reflector portions 122-1, 122-2, 122-3 and the respective positions of a pair of transducers 112-1, 112-2, 112-3 that are spatially aligned with the respective boundaries of the respective reflector portion 122-1, 122-2, 122-3 described above is a non-limiting one and in other examples the spatial relationship between the transducer positions and the shape and position of the ellipsoidal reflector surface may be defined in a different manner while still providing advantageous reflection characteristics described in the present disclosure.

The examples above (implicitly) define the structure of the trilaterally symmetrical wind measurement arrangement and hence the structure of the wind measurement apparatus 100 in this regard via first defining the respective positions of the transducers 112-1, 112-2, 112-3 on the cover-portion-facing surface of the base portion 110 and applying the respective positions chosen for the transducers 112-1, 112-2, 112-3 to define the concave shapes of the reflector surfaces of the reflector portions 122-1, 122-2, 122-3 and their positions with respect to the transducers 112-1, 122-2, 122-3 in accordance with the relationship described above, thereby also (at least indirectly) defining the distance between the base portion 110 and the cover portion 120. According to another example, the design procedure of the of the trilaterally symmetrical wind measurement arrangement and, consequently, the structure of the wind measurement apparatus 100, may involve first defining the concave shapes of the reflector surfaces of the reflector portions 122-1, 122-2, 122-3 and subsequently defining the respective positions of the transducers 112-1, 112-2, 112-3 with respect to the reflector portions 122-1, 122-2, 122-3 in accordance with the relationship described above, thereby also (at least indirectly) defining the distance between the base portion 110 and the cover portion 120. The design of the wind measurement arrangement in terms of respective positions of the transducers 112-1, 112-2, 112-3 and the respective positions and shapes of the reflector portions 122-1, 122-2, 122-3 may be carried out e.g. by an experimental procedure via usage of suitable simulation tool(s) in order to find the respective positions of the transducers 112-1, 112-1, 112-3, their orientation with respect the reflector assembly 122 and the shapes for the concave reflector portions 122-1, 122-2, 122-3 that provide a desired performance in consideration of any design constraints e.g. in terms of size of the wind measurement apparatus 100.

Figure 3 illustrates a block diagram of some (logical) elements of the wind measurement apparatus 100 according to the first example. In this regard, Figure 3 illustrates the transducers 112-1, 112-2, 112-3 and a control portion 130. The control portion 130 may control at least some aspects of operation of the transducers 112-1, 112-2, 112-3, e.g. transmission of respective measurement signals from the transducers 112-1, 112-2, 112-3 in form of the respective TX beams and capturing of reflected measurement signals based on reflections of the respective TX beams received at the transducers 112-1, 112-2, 112-3. Moreover, the control portion 130 may derive one or more wind characteristics based on respective propagation delays of the measurement signals from one of the transducers 112-1, 112-2, 112-3 to the other transducers 112-1, 112-2, 112-3 that are adjacent thereto, e.g. based on time delays between transmission of the measurement signals from each of the transducers 112-1, 112-2, 112-3 and their reception at the adjacent ones of the other transducers 112-1, 112-2, 112-3, thereby providing a time-of-flight based wind measurement. The control portion 130 may receive control input (CTRL) via a user interface or from another apparatus and the control portion 130 may output at least part of the derived wind characteristics via the user interface or to another apparatus.

As described in the foregoing, the measurement signals conveyed in the respective TX beams may comprise ultrasonic signals that may be characteristic to the applied transducers 112-1, 112-2, 112-3 or that may be supplied for transmission in the respective TX beam by the respective transducer 112-1, 112-2, 112-3. In the former scenario, the control portion 130 may operate the transducers 112-1, 112-2, 112-3 to transmit the respective measurement signals according to a predefined schedule, whereas in the latter scenario, the control portion 130 may provide the transducers 112-1, 112-2, 112-3 with the respective measurement signals for transmission therefrom according to the predefined schedule. In this regard, the measurement signals conveyed in the TX beams may convey a certain waveform, e.g. a pulse or a sequence of pulses, at ultrasonic frequencies and, consequently, the propagation time of the measurement signal from a certain one of the transducers 112-1, 112-2, 112-3 to another one of the transducers 112-1, 112-2, 112-3 may be conveniently determined at the control portion 130 via matching the respective pair of the certain waveform in the measurement signal transmitted from one of the transducers 112-1, 112-2, 112-3 and its 'copy' in the measurement signal captured at another one of the transducers 112-1, 112-2, 112-3. Such an approach for measurement of wind characteristics such as wind speed and/or wind direction in general is known in the art and hence further details in this regard are not provided in the present disclosure.

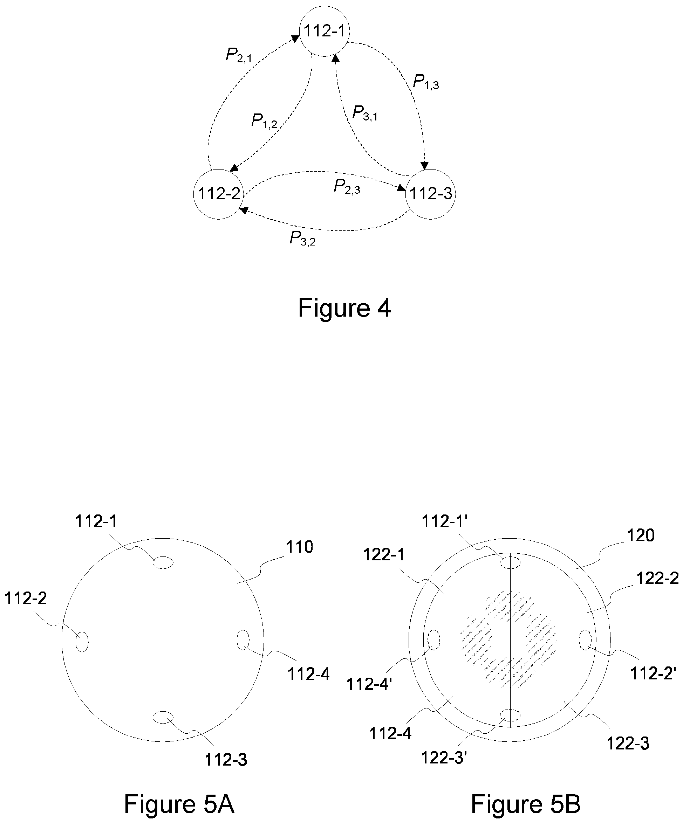

The trilaterally symmetric wind measurement arrangement of the wind measurement apparatus 100 according to the first example enables substantially simultaneous measurement on six measurement paths of substantially equal length via usage of the three transducers 112-1, 112-2, 112-3. This aspect is schematically illustrated via Figure 4 that shows measurements paths *P*_{1,2}, *P*_{2,1}, *P*_{1,3}, *P*_{3,1}, *P*_{2,3}, *P*_{3,2} between each pair of the adjacent transducers 112-1, 112-2, 112-3, where *P*_{m,n} denotes a transmission path from the transducer 112-m to the transducer 112-n via the respective one of the reflector portions 122-1, 122-2, 122-3. While substantially simultaneous measurements from three measurement paths has been typically considered as a minimum requirement for reliable determination of wind speed and wind direction, availability of substantially simultaneous measurements from the six measurement paths *P*_{1,2}, *P*_{2,1}, *P*_{1,3}, *P*_{3,1}, *P*_{2,3}, *P*_{3,2} enables superior measurement results in terms of their accuracy and reliability via redundancy provided by the additional measurement paths, which may be especially advantageous in measurements carried out in strong winds.

Along the lines described above, the aspect of the reflector assembly 122 serving to split the respective measurement signals transmitted from each of the transducers 112-1, 112-2, 112-3 for reception by the adjacent transducers 112-1, 112-2, 112-3 enables simultaneous measurement from six measurement paths via usage of only three transducers, thereby enabling accurate, reliable and robust arrangement for wind measurement via usage of a relatively small number of components and, consequently, providing a cost-effective approach for wind measurement. Moreover, the concave shape (e.g. substantially ellipsoidal shape) of the reflector portions 122-1, 122-2, 122-3 enables a relatively short measurement distance (i.e. the distance between the base portion 110 and the cover portion 120), thereby allowing for relatively small size of the wind measurement apparatus 100, which is advantageous in a majority of usage scenarios.

Another advantage of the trilaterally symmetrical wind measurement arrangement applied in the wind measurement apparatus 100 according to the first example is simultaneous focusing and amplification of the measurement signal conveyed in the TX beam and automatic directional correction, which both are consequences of the concave shape of the reflector portions 122-1, 122-2, 122-3:
- Due to the concave shape of the reflector portion 122-2, signal components conveyed in the TX beam transmitted from the transducer 112-1 are reflected towards the transducer 112-2 from a relatively large sub-area of the reflector portion 122-2 (e.g. in comparison to a reflector having a substantially planar surface). While this characteristic of the reflector portion 122-2 allows for some freedom in choosing the target position for the respective TX beam (as described in the foregoing), it also serves to provide directional correction e.g. in a scenario where the respective TX beam misses its target position e.g. due to strong wind, due to minor irregularities in the shape of the reflector surface of the reflector portion 122-2 due manufacturing tolerances, or due to (minor) structural damage caused to the wind measurement apparatus 100.
- Due to the concave shape of the reflector portion 122-2, the propagation time of the signal components conveyed in the respective TX beam transmitted from the transducer 112-1 to the adjacent transducer 112-2 is substantially similar regardless of the position of the reflector portion 122-2 serving to reflect these signal components, thereby allowing for flexible design of the wind speed measurement arrangement in terms of the target position on the reflector portion 122-2 for the respective TX beam transmitted from the transducer 112-1. Another advantage arising from this characteristic of the concave reflector portion 122-2 is that the signal components across the respective TX beam transmitted from the transducer 112-1 arrive at the adjacent transducer 112-2 substantially simultaneously, thereby amplifying the received measurement signal e.g. in comparison to a scenario that applies direct transmission of the TX beam from the transducer 112-1 to the transducer 112-2 or to one that applies a reflector having a substantially planar surface. Such amplification may be especially advantageous for (more than) compensating for the loss of signal power that occurs due to splitting the respective TX beams transmitted from the transducers 112-1, 112-2, 112-3 into the first and second portions by the ridge formed at the associated boundary within the reflector assembly 122.

Still referring to the first example, as indicated in the schematic illustration of Figure 1A, the reflector portions 112-1, 112-2, 112-3 of the reflector assembly 122 may be provided as respective concave recesses arranged on the base-portion-facing surface of the cover portion 120. In other words, the reflector assembly 122 is embedded into the cover portion 120. Regardless of the concave shape of the reflector portions 122-1, 122-2, 122-3 and the ridges formed therebetween, the reflector assembly 122 nevertheless provides a relatively smooth and substantially featureless surface for the base-portion-facing surface of the cover portion 120 that does not include significant protruding features or elements extending into the measurement volume between the base portion 110 and the cover portion 120. Such streamlined base-portion-facing surface of the cover portion 120 is advantageous in that absence of significant protruding features or elements facilitates undisturbed airflow through the measurement volume between the base portion 110 and the cover portion 120, which contributes to improved reliability and accuracy of the measurement results in comparison to designs that involve airflow-disturbing features or elements that extend into the measurement volume.

As described in the foregoing, the reflector assembly 122 is divided into the concave reflector portions 122-1, 122-2, 122-3. In other words, the respective reflector surfaces of the reflector portions 122-1, 122-2, 122-3 form a contiguous reflector area for the reflector assembly 122. The contiguous reflector area preferably covers an area on the base-portion-facing surface of the cover portion 120 that includes respective projections of the transducers 112-1, 112-2, 112-3 on the base-portion-facing surface of the cover portion 120 along a line that is perpendicular to the reference plane. As an example in this regard, the contiguous reflector area may be a substantially circular area whose projection on the cover-portion-facing surface of the base portion 110 along a line that is perpendicular to the reference plane encircles the transducers 112-1, 112-2, 112-3. In various examples, the contiguous reflector area preferably covers a majority of the base-portion-facing surface of the cover portion 120, where the coverage may be e.g. in a range from 80 to 100 %. The relatively large contiguous reflector area facilitates efficient transfer of the measurement signals in reflections from the reflector portions 122-1, 122-2, 122-3 of the reflector assembly 120.

Figures 5A and 5B schematically illustrate some components of a wind measurement apparatus 100 according to a second example. As in the first example described in the foregoing, also in the second example the wind measurement apparatus 100 comprises the base portion 110 and the cover portion 120 arranged at a distance from each other to form a gap that allows for an airflow between the base portion 110 and the cover portion 120. The wind measurement apparatus 100 according to the second example is similar to the first example in operational characteristics and structure, apart from the different number of transducers and the different number of reflector portions: in the second example the arrangement of transducers on the cover-portion-facing side (e.g. on the cover-portion-facing surface) of the base portion 110 includes four transducers 112-1, 112-2, 112-3 and 112-4, whereas the reflector assembly 122 on the base-portion-facing side (e.g. on the base-portion-facing surface) of the cover portion 120 includes four substantially identical concave reflector portions 122-1, 122-2, 122-3 and 122-4 and exhibits rotational symmetry of order four, thereby constituting a quadrilaterally symmetrical wind measurement arrangement.

Figure 5A schematically illustrates the cover-portion-facing side of the base portion 110 according to the second example, showing the transducers 112-1, 112-2, 112-3, 112-4 that are arranged at respective positions that correspond to respective vertices of a (conceptual) square arranged on the cover-portion-facing side of the base portion 110, thereby constituting a quadrilaterally symmetrical arrangement of the transducers 112-1, 112-2, 112-3, 112-4 on the cover-portion-facing side of the base portion 110. As another way of specifying the arrangement of the transducers 112-1, 112-2, 112-3, 112-4 on the cover-portion-facing side of the base portion 110, the transducers 112-1, 112-2, 112-3, 112-4 may be disposed at respective positions that are evenly spread (i.e. evenly spaced) on a (conceptual) circle on the cover-portion-facing side of the base portion 110. In the second example, for any of the transducers 112-1, 112-2, 112-3, 112-4 the two other transducers that are closest thereto may be considered as transducers that are adjacent to the respective one of the transducers 112-1, 112-2, 112-3, 112-4.

As described in the foregoing, in the second example the reflector assembly 122 includes a quadrilaterally symmetrical arrangement of the reflector portions 122-1, 122-2, 122-3, 122-4, where each of the reflector portions 122-1, 122-2, 122-3, 122-4 may comprise a respective concave surface for reflecting measurement signals transmitted from a given one of the transducers 112-1, 112-2, 112-3, 112-4 for reception by an adjacent transducer 112-1, 112-2, 112-3, 112-4 and for reflecting measurement signals transmitted from the adjacent transducer 112-1, 112-2, 112-3, 112-4 for reception by the given one of the transducers 112-1, 112-2, 112-3, 112-4. As in the case of the first example, also in the second example a respective boundary between each pair of two adjacent reflector portions 122-1, 122-2, 122-3, 122-4 forms a respective ridge due to the concave shapes of the reflector portions 122-1, 122-2, 122-3, 122-4.

As in case of the first example, also in the second example each of the transducers 112-1, 112-2, 112-3, 112-4 may be spatially aligned with one of the boundaries between two adjacent reflector portions 122-1, 122-2, 122-3, 122-4 and may be arranged to transmit the respective TX beam such that its center axis is directed at a predefined target position in the boundary aligned with the respective one of the transducers 112-1, 112-2, 112-3, 112-4, thereby splitting the respective TX beam into the two portions for reflection to the adjacent ones of the transducers 112-1, 112-2, 112-3, 112-4 via the adjacent reflector portions 122-1, 122-2, 122-3, 122-4 on the opposite sides of the respective boundary.

Aspects that relate to other characteristics of structure and/or operation of the wind measurement apparatus 100 according to the second example, e.g. ones related to reflection of the TX beams originating from a given one of the transducers 112-1, 112-2, 112-3, 112-4 via the adjacent reflector portions 122-1, 122-2, 122-3, 122-4 to the adjacent ones of the transducers 112-1, 112-2, 112-3, 112-4, to the concave shape (e.g. the substantially ellipsoidal shape) of the reflector portions 122-1, 122-2, 122-3, 122-4 in dependence of the respective positions of a pair of transducers 112-1, 112-2, 112-3, 112-4 (or vice versa), to the respective orientations of the transducers 112-1, 112-2, 112-3, 112-4 with respect to the base portion 110, to the position of the reflector assembly 122 with respect to the cover portion 120, to the size of the contiguous reflector area of the reflector assembly 122 in relation to the size of the cover portion 120 and/or in relation to the respective positions of the transducers 112-1, 112-2, 112-3, 112-4 as well as to general operation of the wind measurement apparatus 100 under control of the control portion 130 may be provided in a manner described in the foregoing in context of the first example, *mutatis mutandis.*

The quadrilaterally symmetric wind measurement arrangement of the wind measurement apparatus 100 according to the second example enables substantially simultaneous measurement on eight measurement paths of substantially equal length. Hence, an advantage of the wind measurement apparatus 100 according to the second example over the wind measurement apparatus 100 according to the first example is further improved accuracy and reliability of the wind measurement due to increased number of measurement paths, while on the other hand introduction of the fourth transducer increases the number of components required for the wind measurement apparatus 100 and hence results in a slightly more complex design.

The first example that relies on the trilaterally symmetrical wind measurement arrangement and the second example that relies on the quadrilaterally symmetrical wind measurement arrangement readily generalize into a wind measurement apparatus 100 according a third example that applies a symmetrical wind measurement arrangement of order N (i.e. a *N-*laterally rotationally symmetrical wind measurement arrangement), where the order N is larger than or equal to three, which has the advantageous characteristics described in the foregoing for the trilaterally symmetrical wind measurement arrangement according to the first example while providing further improvement in terms of accuracy and reliability of the wind measurement with increasing value of N. Such a measurement arrangement includes an arrangement of N transducers and the reflector assembly 122 that is divided into N substantially identical reflector portions. In this regard, the N transducers may be jointly referred to via a refence number 112, any of the N transducers may be referred to via a reference number 112-n, while any of the N reflector portions may be referred to via a reference number 122-n.

The arrangement of the *N* transducers 112 disposed on the base portion 110 with respect to the N reflector portions 122-n of the reflector assembly 122 provided in the cover portion 120 (or vice versa) may be characterized e.g. in the following manner:
- an arrangement of N transducers 112 may be disposed on the cover-portion-facing side (e.g. on the cover-portion-facing surface) of the base portion 110 in respective positions that serve as respective vertices of a convex regular polygon of the order *N*;
- the reflector assembly 122 may be arranged on the base-portion-facing side (e.g. on the base-portion-facing surface) of the cover portion 120, wherein the reflector assembly 122 is divided into N substantially identical concave reflector portions 122-n, the reflector assembly 122 thereby exhibiting rotational symmetry of the order N; and
- the reflector assembly 122 and the base portion 110 may be disposed with respect to each other such that each of the N transducers 112-n is spatially aligned with a respective boundary between two adjacent reflector portions 122-n.

Still referring to the third example, each of the transducers 112-n may be arranged to transmit the respective TX beam such that its center axis is directed at a predefined target position in the boundary aligned with the respective one of the transducers 112-n, thereby splitting the respective TX beam into the two portions for reflection to the adjacent ones of the transducers 112-n via the adjacent reflector portions 122-n on the opposite sides of the respective boundary.

Aspects that relate to other characteristics of structure and/or operation of the wind measurement apparatus 100 according to the third example, e.g. ones related to reflection of the TX beams originating from a given one of the transducers 112-n via the adjacent reflector portions 122-n towards the adjacent ones of the transducers 112-n, to the concave shape (e.g. the substantially ellipsoidal shape) of the reflector portions 122-n in dependence of the respective positions of a pair of transducers 112-n (or vice versa), to the respective orientations of the transducers 112-n with respect to the base portion 110, to the position of the reflector assembly 122 with respect to the cover portion 120, to the size of the contiguous reflector area of the reflector assembly 122 in relation to the size of the cover portion 120 and/or in relation to the respective positions of the transducers 112-n as well as to general operation of the wind measurement apparatus 100 under control of the control portion 130 may be provided in a manner described in the foregoing in context of the first and/or second example, *mutatis mutandis.*

In general, increasing N, i.e. increasing the number of the transducers 112-n and the number of reflector portions 122-n in the reflector assembly 122, basically results in further improvements in accuracy and reliability of the wind measurement via increasing the number of measurement paths, while on the other hand it results in increasing the number of components required for the wind measurement apparatus 100 and in more complex design. Consequently, the most expedient number of the transducers 112-n and the reflector portions 122-n to be applied in the wind measurement arrangement of the wind measurement apparatus 100 may depend on the intended usage of the wind measurement apparatus 100 and/or on requirements and/or constraints set for the accuracy and reliability of the wind measurement, for the size of the wind measurement apparatus 100, for the manufacturing cost of the wind measurement apparatus 100, etc.

The examples described in the foregoing generally refer to substantially simultaneous measurement carried out on multiple measurement paths, which enables accurate and reliable wind measurements. In the course of operation of the wind measurement apparatus 100, the control portion 130 may operate the transducers 112-n to periodically transmit the measurement signal in the respective TX beams. In this regard, the transmission of the measurement signals from the transducers 112-nk may be carried out according to a predefined schedule, typically at predefined time intervals, where the time delay between two successive transmissions of the measurement signal from the transducers 112-n may be referred to as a measurement interval. In this regard, the shorter measurement interval may result in improved measurement performance in terms of the ability to track any changes in wind characteristics without undue delay, while it may result in increasing the computation required in operation of control portion 130 to derive the one or more wind characteristics.

In the *N-*laterally symmetrical wind measurement arrangement according to the first, second and third examples described in the foregoing, the TX beam received at a certain transducer 112-n (via reflection from the reflector assembly 122) may be further reflected from the front face of the respective transducer 112-n, thereby providing a reflected TX beam that may be further transferred (via the reflector assembly 122) towards the two other transducers 112-p1, 112-p2 that are adjacent to the respective transducer 112-n. Moreover, similar further reflection may occur from the respective front faces of the adjacent transducers 112-p1, 112-p2 (via the reflector assembly 122) towards the transducers that are adjacent to the transducers 112-p1, 122-p2. In other words, the symmetrical design may result in the measurement signals propagating over multiple hops due to the TX beam received at the transducer 112-n further being reflected from its front face towards the reflector assembly 122.

Considering this phenomenon with references to the measurement paths *P*_{m,n} illustrated in Figure 4, the measurement signal transmitted in the respective TX beam from the transducer 112-1 and received at the transducer 112-2 via the measurement path *P*_{1,2} may be reflected in the respective reflected TX beam from the front face of the transducer 112-2 via the measurement path *P*_{2,3} further to the transducer 112-3. Moreover, the measurement signals received in the reflected TX beam that is reflected from the front face of the transducer 112-2 and received at the transducer 112-3 via the measurement path *P*_{2,3} may be further reflected from the front face of the transducer 112-3 via the measurement path *P*_{3,1} to the transducer 112-1, the cascaded reflections thereby forming a full loop around the arrangement of three transducers 112-1, 112-2, 112-3. In this regard, the first hop from the transducer 112-1 to the transducer 112-2 may be referred to as a primary hop (over the measurement path *P*_{1,2}), whereas the subsequent reflections from the transducer 112-2 to the transducer 112-3 (over the measurement path *P*_{2,3}) and from the transducer 112-3 back to the transducer 112-1 (over the measurement path *P*_{3,1}), as well as any further reflections that may follow, may be referred to as respective secondary hops.

While in practice the measurement signals attenuate to some extent at each hop due to reflection from the respective front face of one of the transducers 112-n, due to the focusing and amplifying characteristics of the reflector assembly 122-n (discussed in the foregoing) no significant attenuation occurs along the signal paths *P*_{m,n} between the adjacent transducers 112-n. Consequently, the measurement signals conveyed in the reflected TX beam(s) may only gradually attenuate when transferred over multiple hops due to reflections from the respective front faces of one or more transducers 112-n. One of the consequences of such cascaded transfer of the measurement signals over the multiple hops is that due to the gradual attenuation the reflected measurement signals may remain at a level that would disturb a subsequent measurement despite having been transferred over several hops and, therefore, the control portion 130 may need to wait for the signal levels of the reflected measurement signals to attenuate below a reference level before controlling the transducers 112-n to transmit subsequent measurement signals in order to prevent reflections of the previously transmitted measurement signals from disturbing measurement carried out based on the subsequent measurement signals. In this regard, the reference level may be defined, for example, as a predefined percentage of the signal level at the transducer 112-n upon receiving the measurement signal over the primary hop, whereas the time (e.g. average time) it takes for the measurement signal to attenuate below the reference level may be referred to as an attenuation time.

As described in the foregoing, for each transducer 112-n, the respective target position of the TX beam transmitted therefrom may be positioned on the respective aligned boundary between two adjacent reflector portions 112-n of the reflector assembly 122, at the respective reference position or within the predefined margin from the respective reference position, thereby aiming at maximizing the signal power transferred from the respective transducer 112-n to the adjacent transducers in the framework defined by the design of the wind measurement arrangement in terms of respective positions of the transducers 112-n and the respective positions and shapes of the reflector portions 122-n. While such selection of the target positions serves to optimize the power transfer over the primary hop, at the same time it also maximizes the power transmission over the one or more secondary hops and, consequently, maximizes the attenuation time.

In case the resulting attenuation time is short enough to enable application of a desired measurement interval, the gradual attenuation of the measurement signal over the cascaded reflections do not constitute a performance issue but, on the contrary, the reflected measurement signals received over one or more secondary hops may be applied to increase robustness of the measurement: while the above-described derivation of the one or more wind characteristics (via operation of the control portion 130) implicitly relies on respective propagation delays of the respective measurement signals transferred over the primary hops, derivation of the one or more wind characteristics may further rely on respective propagation delays of the reflected measurement signals transferred over one or more secondary hops. Such an approach enables at least the following advantages over consideration of the measurements carried out based on the primary hops only:
- Consideration of at least one secondary hop in derivation of the one or more wind characteristics at least doubles the amount of data available for estimation of wind characteristics. Even though the measurement signal attenuates to some extent in each consecutive hop, the measurement signals conveyed over a first few secondary hops (e.g. over the first secondary hop or over the first two secondary hops) typically still provide information that enables reliable estimation of propagation delays over the respective secondary hop, thereby providing further measurement data that enables overall improvement in derivation of the one or more wind characteristics.
- Consideration of at least one secondary hop in derivation of the one or more wind characteristics enables relatively accurate and reliable derivation of the one or more wind characteristics even if one of the transducers 112-n suffers a malfunction: even though one of the transducers 112-n would be unable to transmit and/or receive the measurement signals, its front face still serves to reflect the measurement signals arriving thereat over the primary hop or over a secondary hop. As an example in this regard, while the reflected measurement signal transferred over the first secondary hop is attenuated to some extent in comparison to the measurement signal transferred over the primary hop, it typically still provides data that allows for derivation of the one or more wind characteristics even when information derivable from the measurement signal transferred over the respective signal path as the primary hop is not available.

On the other hand, in some scenarios the resulting attenuation time may not be short enough to enable application of the desired measurement interval, the gradual attenuation of the measurement signal over the cascaded reflections thereby resulting in a performance issue either in terms of forcing usage of a measurement interval that is longer than the desired one in order to ensure the reflected measurement signals attenuating below the reference level before transmitting subsequent measurement signals from the transducers 112-n or in terms of possibly compromised measurement results due to presence of reflected measurement signals having signal levels that exceed the reference level upon transmitting subsequent ones.

A straightforward approach for controlling the attenuation time involves usage of reduced transmission power for transmitting the measurement signals from the transducers 112-n while keeping the structure of the measurement arrangement unchanged from that described above with references to the first, second and third examples, thereby reducing the number of hops over which the level of the reflected measurement signal remains above the reference level. In this regard, the transmission power that results in a desired attenuation time and/or that results in a desired number of secondary hops with the reflected signal level still exceeding the reference level may be applied, where the applicable transmission power may be found via an experimental procedure via usage of suitable simulation tool(s). Even though such an approach enables receiving the respective portions of the TX beams transmitted from the transducers 112-n in their entirety at the adjacent transducers, this approach results in reduced signal power also over the primary hop, which typically degrades the measurement performance, especially in challenging measurement conditions such as in very strong winds.

Another approach for controlling the attenuation time involves modifying one or more characteristics of the wind measurement arrangement from the design described in the foregoing in order to limit the power transfer in reflections of the TX beams from respective front faces of the transducers 112-n. Such modification may involve adjusting respective orientations of the transducers 112-n with respect to the reflector assembly 122 (and hence with respect to the base portion 110) and/or providing the respective reflector surfaces of the reflector portions 122-n such that they have a shape that is arranged to facilitate power transfer in the respective TX beams transmitted from the transducers 112-n for reception after a first refection from the reflector assembly 122 (e.g. to facilitate power transfer over the primary hop) while limiting power transfer in the partial reflections of TX beams from respective front faces of the transducers 112-n after the first reflection from the reflector assembly 122 (e.g. to limit power transfer over secondary hops).

An example of modifying the design of the wind measurement arrangement such that power transferred in the TX beams reflected from the front faces of the transducers 112-n is limited involves adjusting respective orientations of the transducers 112-n with respect to the base portion 110 such that the respective target positions for the center axes of the respective TX beams transmitted from the transducers 112-n are offset from the respective reference positions (described in the foregoing) by more than the predefined margin while keeping other aspects of the structure of the wind measurement arrangement unchanged from that described above with references to the first, second and third examples, thereby providing less than optimal power transfer via reflection from the reflector assembly 122. Consequently, even though due to focusing characteristics of the concave (e.g. substantially ellipsoidal) reflector portions 122-n the signal power transferred over the primary hop is only slightly compromised, due to the offset that is accruing over cascaded secondary hops the reflected signal level attenuates below the reference level over a reduced number of hops, thereby shortening the attenuation time. According to an example, the offset from the reference position may be provided along the respective boundary, whereas in another example the offset may bring the target position off the respective boundary and/or the offset from the reference position may bring the reference position off the respective boundary. A suitable offset that results in a desired attenuation time and/or that results in a desired number of secondary hops with the reflected signal level still exceeding the reference level may be found via an experimental procedure via usage of suitable simulation tool(s).

Another example of modifying the design of the wind measurement arrangement such that power transferred in the TX beams reflected from the front faces of the transducers 112-n is limited comprises offsetting the respective positions of the transducers 112-n with respect to their associated boundaries within the reflector assembly 122 by a predefined distance in comparison to the spatial relationship described in the foregoing while keeping other aspects of the structure of the measurement arrangement unchanged from that described above with references to the first, second and third examples. Such offsetting of the transducer positions in relation to the respective reflector portions 122-n may result in a similar effect as described above for an approach that involves adjusting respective orientations of the transducers 112-n with respect to the base portion 110, whereas a suitable offset that results in a desired attenuation time and/or in a desired number of secondary hops with the reflected signal level still exceeding the reference level may be found via an experimental procedure via usage of suitable simulation tool(s).

A further example of modifying the design of the wind measurement arrangement such that power transmitted in the TX beams reflected from the front faces of the transducers 112-n is limited involves designing the concave surfaces of the reflector portions 122-n such that for each reflector portion 122-n the respective reference axis meets the reflector surface in a non-normal angle. In this regard, the reference axis may be defined in the same manner as in the foregoing, i.e. as an axis that is substantially perpendicular to the reference plane defined by the respective locations of the transducers 112-n and that intersects (e.g. bisects) the (conceptual) reference line segment connecting the pair of transducers 112-n that are spatially aligned with boundaries of the respective reflector portion 122-n at a position that is substantially at an equal distance from said pair of transducers 122-n. An arrangement where the reference axis meets the reflector surface in a non-normal angle results in narrowing or even completely eliminating the consistent path between said pair of transducers 112-n. Such design of the spatial arrangement of the transducers 112-n and the reflector portions 122-n allows for controlled degradation of reflection characteristics between each pair of the transducers 112-n in order to limit power transfer in the (partial) reflections of the TX beams from respective front faces of the transducers 112-n.

Still referring to the example of arranging the reference axis that (partially) defines the positions of the transducers 112-n in relation to the reflector surface such that it meets the reflector surface in a non-normal angle, deviation from the normal angle may be chosen such that it results in providing desired 'distortion' to the reflection characteristics, e.g. one that results in desired attenuation time and/or in a desired number of secondary hops with the reflected signal level still exceeding the reference level. An example of defining such positioning of the pair of transducers 112-n with respect to the respective reflector surface may comprise translation of the underlying concave surface (e.g. the underlying ellipsoid, sphere or paraboloid) that defines the curvature of the reflector portion 122-n in relation to respective positions of the respective pair of the transducers 112-n in comparison to their spatial relationship described in the foregoing in order to narrow or to eliminate the consistent path between the respective pair of transducers 112-n. In this regard, the translation may involve lateral translation along the reference plane defined by the respective locations of the transducers 112-n and/or vertical translation along the reference axis (e.g. perpendicular to a line connecting the respective pair of transducers 112-n). The amount and direction of translation that results in a desired attenuation time and/or in a desired number of secondary hops with the reflected signal level still exceeding the reference level may be found via an experimental procedure via usage of suitable simulation tool(s).

Optionally, the above-described approach that involves shaping of the reflector surface such that the reference axis meets the reflector surface in a non-normal angle may further involve shaping the curvature in one or more sub-portions of the concave reflector portions 122-n in a manner that results in partially compensating for the (intentionally) compromised reflection characteristics between the respective pair of transducers 112-n, which enables at least partially compensating for the reduced power transfer over the primary hop and a desired number of secondary hops. Such a design may result in the respective reflector surface having a first sub-portion having a shape that is substantially defined by a portion of underlying concave surface (e.g. an ellipsoid, a sphere or a paraboloid) and one or more second sub-portions having curvature different from that of the first sub-portion for enhancing transfer of the respective TX beams that are (actually) transmitted from the respective pair of transducers 112-n (to enhance power transfer over the respective primary hops). In this regard, respective curvatures of the one or more second sub-portions of the reflector surface that result in a desired attenuation time and/or in a desired number of secondary hops with the reflected signal level still exceeding the reference level may be found via an experimental procedure via usage of suitable simulation tool(s).

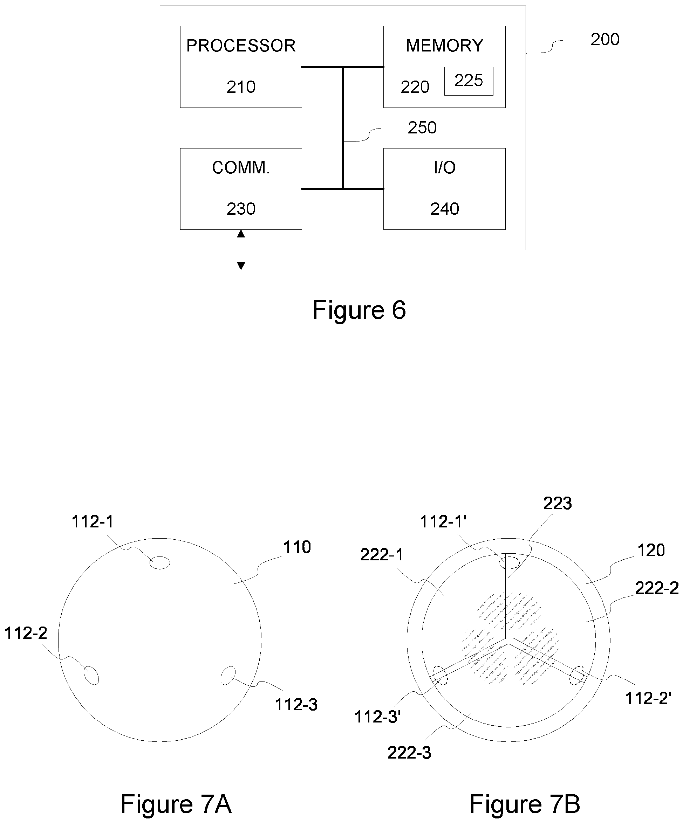

In further examples of modifying the design of the wind measurement arrangement such that power transferred in the TX beams reflected from the front faces of the transducers 112-n is limited, the design of the reflector assembly 122 may be modified such that it further comprises a beam suppression portion that is arranged to reduce reflections from direction of the reflector assembly 122 towards the transducers 112-n in a controlled manner. In this regard, Figures 7A and 7B schematically illustrate some components of a wind measurement apparatus 100 according to a fourth example, which is a variation of the first example described in the foregoing. As in the first example, also in the fourth example the wind measurement apparatus 100 comprises the base portion 110 and the cover portion 120 arranged at a distance from each other to form a gap that allows for an airflow between the base portion 110 and the cover portion 120 with the transducers 112-1, 112-2, 112-3 disposed on the cover-portion-facing surface of the base portion 110 in a manner described above for the first example. As a structural difference to the first example, the fourth example comprises a reflector assembly 222 described in the following instead of the reflector assembly 122 described in the foregoing.

As illustrated in Figure 7B, the reflector assembly 222 comprises three substantially identical concave reflector portions 222-1, 222-2 and 222-3, which are separated from each other by respective sections of a beam suppression portion 223 that extend from the center point of the reflector assembly 222 towards the perimeter of the reflector assembly 222. Hence, in the fourth example, the respective reflector surfaces of the reflector portions 222-1, 222-2, 222-3 form a non-contiguous reflector area due to the respective sections of the beam suppression portion 223 separating each pair of adjacent reflector portions 222-1, 222-2, 222-3 from each other and hence dividing the reflector area into three substantially identical parts. Also in the fourth example each of the reflector portions 222-1, 222-2, 222-3 is provided as a respective recess on the base-portion-facing surface of the cover portion 120 and the arrangement of the reflector portions 222-1, 222-2, 222-3 exhibits rotational symmetry of order three, the transducers 112-1, 112-2, 112-3 and the reflector portions 222-1, 222-2, 222-3 thereby forming a trilaterally symmetrical wind measurement arrangement.

Along the lines described in the foregoing for the first example, also in the fourth example each of the reflector portions 222-1, 222-2, 222-3 comprises a respective concave reflector surface for reflecting measurement signals transmitted from a given one of the transducers 112-1, 112-2, 112-3 for reception by an adjacent transducer 112-1, 112-2, 112-3 and for reflecting measurement signals transmitted from the adjacent transducer 112-1, 112-2, 112-3 for reception by the given one of the transducers 112-1, 112-2, 112-3. The concave shape (e.g. the substantially ellipsoidal shape) of the reflector portions 222-1, 222-2, 222-3 defined in dependence of the respective positions of a pair of transducers 112-1, 112-2, 112-3 (or vice versa) is similar that described in the foregoing in context of the first example for the reflector portions 122-1, 122-2, 122-3, *mutatis mutandis.* On the other hand, unlike in the first example, no ridges are formed between adjacent reflector portions 222-1, 222-2, 222-3 due to the respective sections of the beam suppression portion 223 provided therebetween.

In the fourth example, a section of the beam suppression portion 223 that resides between a pair of adjacent reflector portions 222-1, 222-2, 222-3 may be considered to form a boundary area between the respective pair of adjacent reflector portions 222-1, 222-2, 222-3, whereas a (conceptual) line that connects the center point of the reflector assembly 222 to the perimeter of the reflector assembly 222 through a boundary area such that it is at substantially equal distance from the respective reflector portions 222-1, 222-2, 222-3 at opposite sides of the boundary area may be considered as a respective boundary between the respective pair of adjacent reflector portions 222-1, 222-2, 222-3. In this regard, along the lines described for the first embodiment, each of the transducers 112-1, 112-2, 112-3 is spatially aligned with one of the boundaries between two adjacent reflector portions 222-1, 222-2, 222-3 (and, conversely, each of the boundaries between two adjacent reflector portions 222-1, 222-2, 222-3 is spatially aligned with one of the transducers 112-1, 112-2, 112-3), as described in the foregoing for the first example, *mutatis mutandis.*

Further in this regard, each of the transducers 112-1, 112-2, 112-3 may be arranged to transmit the respective TX beam such that its center axis is directed at a predefined target position in the boundary aligned with the respective one of the transducers 112-1, 112-2, 112-3, such that the respective TX beam transmitted from the transducer 112-1, 112-2, 112-3 meets a portion of the surface of the respective boundary area and respective reflector surfaces of the adjacent reflector portions 222-1, 222-2, 222-3 on opposite sides of said boundary area. In other words, the respective TX beam may be transmitted from the transducer 112-1, 112-2, 112-3 such that its 'footprint' on the reflector assembly 222 overlaps the boundary that is aligned with the respective one of the transducers 112-1, 112-2, 112-3 and also overlaps the respective boundary area.

Consequently, a first side-portion of the respective divergent TX beam transmitted from the transducer 112-1, 112-2, 112-3 meets a portion of the surface of one of the reflector portions 222-1, 222-2, 222-3 on a first side of the boundary aligned with the respective transducer 112-1, 112-2, 112-3 and a second side-portion of the respective TX beam meets a portion the surface of another one of the reflector portions 122-1, 122-2, 122-3 on a second side of the boundary aligned with the respective transducer 112-1, 112-2, 112-3. Moreover, a mid-portion of the respective TX beam meets a portion of the boundary area (i.e. a portion of the respective section of the beam suppression portion 223). Hence, with the center axis of the respective TX beam directed at the target position located in the boundary aligned with the respective transducer 112-1, 112-2, 112-3, the respective boundary area serves to split the respective TX beam into the first and second side-portions and the mid-portion, where the first and second side-portions that are substantially equal in size are reflected from the respective pair of adjacent reflector portions 222-1, 222-2, 222-3 at opposite sides of the respective boundary towards the adjacent ones of the transducers 112-1, 112-2, 112-3 and where the mid-portion is deflected off the transducers 112-1, 112-2, 112-3, dispersed and/or absorbed.

As an example in this regard, the hatched oval-shaped portions in the schematic illustration of Figure 7B depict the respective portions of the reflector assembly 222 met by the respective TX beams transmitted from the transducers 112-1, 112-2, 112-3. Along the lines described in the foregoing for the first example, it is worth noting that the schematic illustration of Figure 7B serves as a conceptual example regarding the respective portions of the reflector assembly 222 met by the respective TX beams transmitted from the transducers 112-1, 112-2, 112-3 with respect to the respective boundaries and the boundary areas within the reflector assembly 222. In various implementations of the wind measurement apparatus 100 according to the fourth example, the respective portions of the reflector assembly 222 met by the respective TX beams transmitted from the transducers 112-1, 112-2, 112-3 may have a size that is different (e.g. larger) in relation to the size of the reflector assembly 222 than that shown in in the illustration of Figure 7B, they may be at different distances from (e.g. closer to) the center point of the reflector assembly 222 and/or they may be partially overlapping with each other, depending e.g. on the distance between the base portion 110 and the cover portion 120, on characteristics of the reflector portions 222-1, 222-2, 222-3, on characteristics of the transducers 112-1, 112-2, 112-3, on the distance between the transducers 112-1, 112-2, 112-3 and/or on the respective target positions applied for the respective TX beams transmitted from the transducers 112-1, 112-2, 112-3.

Along the lines described in the foregoing, the purpose of the beam suppression portion 223 is to steer reflections of the respective mid-portions of the TX beams directed thereat off the transducers 112-1, 112-2, 112-3. This may be provided, for example, via deflecting the mid-portions such that they are substantially not received by any of the transducers 112-1, 112-2, 112-3, via dispersing the mid-portions such that they are dispersed rather than reflected in order to significantly reduce the power density in their 'reflections' conveyed towards the transducers 112-1, 112-2, 112-3 and/or via absorbing the mid-portions to a substantial extent, thereby significantly reducing the signal power in their reflections conveyed towards the transducers 112-1, 112-2, 112-3. While such steering, e.g. deflection, dispersion and/or absorption, of the mid-portions of the TX beams reduces the signal power transferred over the primary hop, due to focusing characteristics of the concave reflector portions 222-1, 222-2, 222-3 the signal power over the primary hop is only slightly compromised, whereas the signal power conveyed over the first and subsequent secondary hops is substantially reduced, thereby shortening the attenuation time. A suitable design of the beam suppression portion 222 that results in a desired attenuation time and/or that results in a desired number of secondary hops with the reflected signal level still exceeding the reference level may be found via an experimental procedure via usage of suitable simulation tool(s).

In a non-limiting example of implementing the beam suppression portion 223, each section of the beam suppression portion 223 may be provided as a respective surface having a shape that deflects the respective mid-portions of the TX beams arriving from respective directions of the transducers 112-1, 112-2, 112-3 in a desired direction and/or in a desired manner. In such an approach, the beam suppression portion 223 may be considered to constitute a beam deflection portion. In this regard, each of the sections between a pair of reflector portions 222-1, 222-3, 222-3 may form a boundary area whose surface is not a continuation of the respective reflector surface shapes of the reflector portions 222-1, 222-2, 222-3 separated from each other by the respective boundary area. Consequently, while the respective reflector surfaces of the reflector portions 222-1, 222-2, 222-3 connected via a given boundary area have a shape that is designed to reflect respective side-portions of the TX beam directed thereto towards respective ones of the transducers 112-1, 112-2, 112-3, the surface of the respective boundary area has a shape that is designed to deflect the mid-portion of the respective TX beam off the transducers 112-1, 122-2, 122-3.

As an example of implementing the beam deflection portion, each section of the beam deflection portion may be provided as a respective substantially planar surface that serves as a respective boundary area between the respective pair of adjacent reflector portions 222-1, 222-2, 222-3. Respective orientations of the planar surfaces may be chosen in view of desired directions of deflections therefrom, e.g. such that each section of the beam deflection portion 223 is provided as a respective substantially planar surface that is substantially in parallel with the reference plane defined by the respective locations of the transducers 112-1, 112-2, 112-3. This results in providing a respective substantially planar boundary region between each pair of adjacent reflector portions 222-1, 222-2, 222-3, which facilitates deflecting at least a substantial part of the mid-portion of the respective TX beam in a direction that is substantially offset from each of the transducers 112-1, 112-2, 112-3. According to further examples, each section of the beam deflection portion may be provided as a respective concave surface (to focus the reflections of the mid-portions to respective desired directions off the transducers 112-1, 112-2, 112-3) or as a respective convex surface (to significantly diverge the reflection of the mid-portion for reduced power density)

In another non-limiting example of implementing the beam suppression portion 223, each section of the beam suppression portion 223 may be provided as a respective surface having dispersive reflection characteristics in order to scatter the mid-portion of the respective TX beam directed thereat, the beam suppression portion 223 thereby serving as a beam dispersion portion. Consequently, due to scattering from the respective dispersively-reflecting boundary area between a pair of reflector portions 222-1, 222-2, 222-3, the signal power conveyed by the mid-portion of the respective TX beam is significantly reduced in comparison to the signal power conveyed in respective reflections of the side-portions of the respective TX reflected from the reflector surfaces of the reflector portions 222-1, 222-2, 222-3 separated from each other by the respective boundary area. The dispersive reflection characteristics may be provided via a suitable fine structure in the respective surfaces of the boundary regions that constitute the respective sections of the beam dispersion portion. As an example in this regard, the respective surfaces of the boundary areas may have a rougher surface in comparison to substantially smooth reflector surfaces of the reflector portions 222-1, 222-2, 222-3.

In another non-limiting example of implementing the beam suppression portion 223, each section of the beam suppression portion 223 may be provided as a respective structural element that serves to absorb the mid-portion of the respective TX beam, the beam suppression portion 223 thereby serving as a beam absorption portion. As an example in this regard, each section of the beam absorption portion may be provided as a surfaces made of material that absorbs a significant amount of the signal power conveyed by the mid-portion of the TX beam meeting the respective surface, thereby suppressing the mid-portion instead of reflecting it. As another example in this regard, each section of the beam absorption portion may be provided as a respective opening between the respective pair of adjacent reflector portions 222-1, 222-2, 222-3. The opening may lead into a cavity within the cover portion 120 where the signal components forming the mid-portions of the respective TX beam are substantially absorbed, or the opening may let the signal components forming the mid-portion pass through the cover portion 120, thereby steering them in a direction that is offset from the transducers 112-1, 112-2, 112-3.

The examples described above pertain to various aspects of the fourth example that are different from corresponding aspects of the first example, whereas other aspects that that relate characteristics of structure and/or operation of the wind measurement apparatus 100 according to the fourth example may be provided in a manner described in the foregoing in context of the first example, *mutatis mutandis.* Moreover, while the examples that pertain to various characteristics of the reflector assembly 222 and its application as part of the wind measurement apparatus 100 are described in the foregoing as modifications of the reflector assembly 122 of the wind measurement apparatus 100 according to the first example, similar modifications are applicable to the respective reflector assembly 122 of the wind measurement apparatus 100 according to the second example and according to the third example, *mutatis mutandis:*

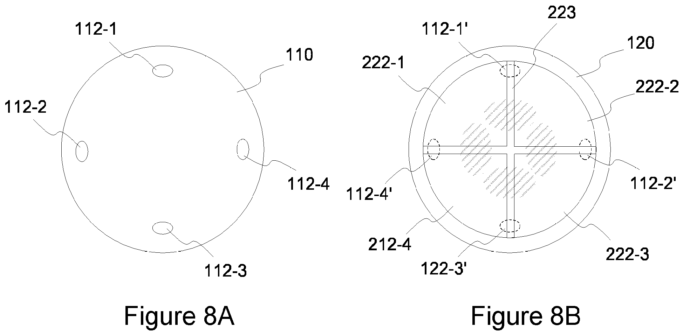

- Figures 8A and 8B schematically illustrate some components of a wind measurement apparatus 100 according to a fifth example, which is a variation of the second example. In this example, the reflector assembly 222 comprises four substantially identical concave reflector portions 222-1, 222-2, 222-3, 222-4, which are separated from each other by respective sections of the beam suppression portion 223 that extend from the center point of the reflector assembly 222 towards the perimeter of the reflector assembly 222. Hence, the reflector assembly 222 according to the fifth example provides a non-contiguous reflector area that exhibits rotational symmetry of order four, the transducers 112-1, 112-2, 112-3, 112-4 and the reflector portions 222-1, 222-2, 222-3, 222-4 thereby forming a quadrilaterally rotationally symmetrical wind measurement arrangement.
- A sixth example is provided as a variation of the third example, where the reflector assembly 222 comprises N substantially identical concave reflector portions 222-n, which are separated from each other by respective sections of the beam suppression portion 223 that extend from the center point of the reflector assembly 222 towards the perimeter of the reflector assembly 222. Hence, the reflector assembly 222 according to the sixth example provides a non-contiguous reflector area that exhibits rotational symmetry of order N, the transducers 112-n and the reflector portions 222-n thereby forming a *N-*laterally rotationally symmetrical wind measurement arrangement.

Figure 6 illustrates a block diagram of some components of an apparatus 200 that may be employed to implement operations described in the foregoing with references to the control portion 130. The apparatus 200 comprises a processor 210 and a memory 220. The memory 220 may store data and computer program code 225. The apparatus 200 may further comprise communication means 230 for wired or wireless communication with other apparatuses and/or user I/O (input/output) components 240 that may be arranged, together with the processor 210 and a portion of the computer program code 225, to provide the user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 200 are communicatively coupled to each other via a bus 250 that enables transfer of data and control information between the components.

The memory 220 and a portion of the computer program code 225 stored therein may be further arranged, with the processor 210, to cause the apparatus 200 to perform at least some aspects of operation of the control portion 130 described in the foregoing. The processor 210 is configured to read from and write to the memory 220. Although the processor 210 is depicted as a respective single component, it may be implemented as respective one or more separate processing components. Similarly, although the memory 220 is depicted as a respective single component, it may be implemented as respective one or more separate components, some or all of which may be integrated/removable and/or may provide permanent / semi-permanent/ dynamic/cached storage.

The computer program code 225 may comprise computer-executable instructions that implement at least some aspects of operation of the control portion 130 described in the foregoing when loaded into the processor 210. As an example, the computer program code 225 may include a computer program consisting of one or more sequences of one or more instructions. The processor 210 is able to load and execute the computer program by reading the one or more sequences of one or more instructions included therein from the memory 220. The one or more sequences of one or more instructions may be configured to, when executed by the processor 210, cause the apparatus 200 to perform at least some aspects of operation of the control portion 130 described in the foregoing. Hence, the apparatus 200 may comprise at least one processor 210 and at least one memory 220 including the computer program code 225 for one or more programs, the at least one memory 220 and the computer program code 225 configured to, with the at least one processor 210, cause the apparatus 200 to perform at least some aspects of operation of the control portion 130 described in the foregoing.

The computer program code 225 may be provided e.g. a computer program product comprising at least one computer-readable non-transitory medium having the computer program code 225 stored thereon, which computer program code 225, when executed by the processor 210 causes the apparatus 200 to perform at least some aspects of operation of the control portion 130 described in the foregoing. The computer-readable non-transitory medium may comprise a memory device or a record medium that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A wind measurement apparatus (100) comprising:
a base portion (110) and a cover portion (120) arranged at a distance from each other to allow for an airflow therebetween;
an arrangement of N transducers (112) disposed on a cover-portion-facing side of the base portion (110) in respective positions that serve as respective vertices of a convex regular polygon of order N, where N is at least three; and
a reflector assembly (122, 222) arranged on a base-portion-facing side of the cover portion (120), wherein the reflector assembly (122, 222) is divided into N substantially identical concave reflector portions (122-n, 222-n) that are provided as respective recesses on the base-portion-facing surface of the cover portion (120),
wherein the reflector assembly (122, 222) and the base portion (110) are disposed with respect to each other such that a center point of the reflector assembly (122, 222) is spatially aligned with a center point of said convex regular polygon and that each of the *N* transducers (112) is spatially aligned with a respective boundary between two adjacent reflector portions (122-n, 222-n),
wherein each transducer (112-n) is arranged to:
transmit a respective ultrasonic measurement signal in a respective transmitter beam, TX beam, towards the reflector assembly (122, 222) such that the respective TX beam meets the two adjacent reflector portions (122-n, 222-n) on opposite sides of the respective boundary with which the respective transducer (112-n) is spatially aligned, and
receive, via said two adjacent reflector portions (122-n, 222-n), respective partial reflections of the respective TX beams originating from those ones of the N transducers (112) that are adjacent to the respective transducer (112-n), and
wherein the apparatus (100) further comprises a control portion (130) arranged to:
operate each transducer (112-n) to transmit the respective ultrasonic measurement signal in the respective TX beam and to capture the respective ultrasonic measurement signals received in the respective partial reflections of the respective TX beams transmitted from those ones of the N transducers (112) that are adjacent to the respective transducer (112-n), and
derive one or more wind characteristic based on respective propagation delays of the respective ultrasonic measurement signals transmitted from the N transducers (112) and captured at those ones of the N transducers (112) that are adjacent to the respective transducer (112-n).

2. A wind measurement apparatus (100) according to claim 1, wherein each concave reflector portion (122-n, 222-n) is arranged to focus a portion of the respective TX beam originating from a first transducer of the N transducers (112) to a second transducer of the N transducers (112) and focus a portion of the respective TX beam originating from the second transducer to the first transducer, where the first transducer is spatially aligned with a first boundary of the respective reflector portion (122-n, 222-n) and the second transducer is spatially aligned with a second boundary of the respective reflector portion (122-n, 222-n).

3. A wind measurement apparatus (100) according to claim 1 or 2, wherein each of the N transducers (112) comprises a respective piezoelectric transducer.

4. A wind measurement apparatus (100) according to any of claims 1 to 3, wherein each transducer (112-n) is arranged to transmit the respective TX beam having its center axis directed towards a respective target position on the boundary between said two adjacent reflector portions (122-n, 222-n) so as to split the respective TX beam at least into a first portion that meets a surface of a first reflector portion on one side of said boundary and a second portion that meets a surface of a second reflector portion on the opposite side of said boundary, where the first and second portions have substantially equal sizes, thereby facilitating power transfer between said two transducers (112-n).

5. A wind measurement apparatus (100) according to any of claims 1 to 4, wherein each concave reflector portion (122-n, 222-n) comprises a concave reflector surface arranged with respect to the respective two transducers (112-n) that are spatially aligned with the respective boundaries of the respective reflector portion (122-n, 222-n) such that a reference axis meets the reflector surface at a normal angle, where said reference axis is substantially perpendicular to a plane defined by respective locations of the N transducers (112) and it intersects a conceptual line connecting said two transducers (112-n) at a position that is substantially at an equal distance from respective positions of said two transducers (112-n), thereby facilitating power transfer between said two transducers (112-n).

6. A wind measurement apparatus (100) according to any of claims 1 to 5, wherein each concave reflector portion (122-n, 222-n) comprises a concave reflector surface defined as a concave cap of an underlying concave surface that is separated therefrom by a surface normal of its center axis, wherein the underlying concave surface comprises one of the following:
an ellipsoid,
a sphere,
a paraboloid.

7. A wind measurement apparatus (100) according to any of claims 1 to 6, wherein each transducer (112-n) is arranged transmit the respective TX beam having its center axis directed towards a predefined target position that is offset from the boundary between said two adjacent reflector portions (122-n) so as to split the respective TX beam at least into a first portion that meets a surface of a first reflector portion on one side of said boundary and a second portion that meets a surface of a second reflector portion on the opposite side of said boundary, where the first and second portions have substantially different sizes, thereby limiting power transfer in reflections of TX beams from respective front faces of those ones of the *N* transducers (112) that are adjacent to the respective transducer (112-n).

8. A wind measurement apparatus (100) according to any of claims 1 to 4, wherein each concave reflector portion (122-n) comprises a concave reflector surface having a shape arranged to facilitate power transfer in the respective TX beams transmitted from the *N* transducers (112) for reception after a first refection from the reflector assembly (122) while limiting power transfer in reflections of TX beams from respective front faces of the N transducers (112) after the first reflection from the reflector assembly (122).

9. A wind measurement apparatus (100) according to any of claims 1 to 4 or 8, wherein each concave reflector portion (122-n) comprises a concave reflector surface arranged with respect to the respective two transducers (112-n) that are spatially aligned with the respective boundaries of the respective reflector portion (122-n) such that a reference axis meets the reflector surface at a non-normal angle, where said reference axis is substantially perpendicular to a plane defined by respective locations of the N transducers (112) and it intersects a conceptual line connecting said two transducers (112-n) at a position that is substantially at an equal distance from respective positions of said two transducers (112-n), thereby limiting power transfer in reflections of TX beams from respective front faces of said two transducers (112-n).

10. A wind measurement apparatus (100) according to claim 9, wherein each concave reflector portion (122-n) comprises a concave reflector surface having a first sub-portion and one or more second sub-portions, wherein the first sub-portion has a shape that is substantially defined by one of the following: a portion of an ellipsoid, a portion of a sphere, a portion of a paraboloid, and
wherein the one or more second sub-portions have a curvature different from that of the first sub-portion for enhancing power transfer in respective TX beams transmitted from said two transducers (112-n).

11. A wind measurement apparatus (100) according to any of claims 1 to 10, wherein the N substantially identical concave reflector portions (122-n) form a contiguous reflector area for the reflector assembly (122), thereby forming a respective ridge at each boundary between two adjacent reflector portions (122-n).

12. A wind measurement apparatus (100) according to any of claims 1 to 6, wherein the reflector portion (222) further comprises a beam suppression portion (223) that includes N sections that each extend from the center point of the reflector assembly (222) towards a perimeter of the reflector assembly (222) such that they form a respective boundary area between each pair of adjacent reflector portions (222-n) that are arranged to steer TX beam portions directed thereat off the *N* transducers (112).

13. A wind measurement apparatus (100) according to claim 12, wherein said boundary areas are provided as respective substantially planar surfaces.

14. A wind measurement apparatus (100) according to any of claims 1 to 13, wherein the control portion (130) is arranged to:
operate each transducer (112-n) to further capture respective reflected measurement signals that are reflected from respective front faces of those ones of the *N* transducers (112) that are adjacent to the respective transducer (112-n); and
derive the one or more wind characteristics further based on respective propagation times of the respective measurement signals transmitted from the *N* transducers (112) and captured at respective other ones of the *N* transducers (112) after reflections from respective front faces of those ones of the *N* transducers (112) that are adjacent to the respective transducer (112-n).

15. A wind measurement apparatus (100) according to any of claims 1 to 14, where *N* is three, the wind measurement apparatus (100) thereby including:
an arrangement of three transducers (112-1, 112-2, 112-3) disposed on the cover-portion-facing side of the base portion (110) in respective positions that serve as respective vertices of a regular equilateral triangle; and
a reflector assembly (122, 222) arranged on the base-portion-facing side of the cover portion (120), wherein the reflector assembly (122, 222) is divided into three substantially identical concave reflector portions (122-1, 122-2, 122-3, 222-1, 222-2, 222-3) that are provided as respective recesses on the base-portion-facing surface of the cover portion (120), the reflector assembly (122, 222) thereby exhibiting trilateral rotational symmetry.
